# EUROPÄISCHE PATENTANMELDUNG

(11) **EP 0 985 994 A1**
(43) Veröffentlichungstag der Anmeldung: **15.03.2000**
(21) Anmeldenummer: 98117217.4
(22) Anmeldetag: 11.09.1998
(51) Int. Cl.: G05D 23/19, G05B 19/10, G06K 11/18, G06F 3/033

(54) **Verfahren und Vorrichtung zur Eingabe von Prozessparametern**

(71) Anmelder: Electrowatt Technology Innovation AG, 6301 Zug (CH)
(72) Erfinder: Copley, Jonathan Miles, 6330 Cham (CH); Hauser, Thomas, 6330 Cham (CH)

(57) **Zusammenfassung**

Die vorliegende Erfindung beschreibt ein Verfahren und eine Vorrichtung zur Eingabe von Prozessparametern, insbesondere einer Heizungs-/Klimaanlage oder mit dieser verbundener Komponenten, wobei auf einem Eingabegerät (1) eines Reglers (2) einer Heizungs-/Klimaanlage oder beispielsweise eines Reglers der Raumtemperatur eines Raumes mittels variabler Anzeige-/Bedienfelder (7, ...7f) und ggf. in Verbindung mit festen Anzeige-/Bedienfeldern (10, 12) unterschiedliche Prozesszustände und /oder die entsprechenden einzustellenden Prozessparameter (14, 16) angezeigt werden. Durch die Wahl unterschiedlicher Bedienebenen (23a, ...23e) können pro gewählter Bedienebene die entsprechenden Prozessparameter (14, 16) eingegeben werden, wobei hier unterschiedliche Anzeige-/Bedienfelder erscheinen. Diese Anzeige-/Bedienfelder (7,...7f) sind derart variabel gestaltet, dass sie pro Bedienebene zum einen entweder als Anzeige- oder Bedienfeld fungieren oder auch keine Aufgabe wahrnehmen und sich jeweils in ihrer Funktion, ihrer Bedeutung und ihrer Grösse ändern, wobei je nach Bedienebene (23a, ...23e) die Bedienperson durch unterschiedlich gestaltete Anzeige-/Bedienfelder, die an unterschiedlichen Positionen des Eingabegeräts (1) in unterschiedlichen Grössen und mit unterschiedlichen Funktionen auftauchen, geleitet wird und so eine intuitive Benutzerführung gewährleistet wird.

## Beschreibung

Die vorliegende Erfindung betrifft ein Verfahren zur Eingabe von Prozessparametern insbesondere einer Heizungs- und/oder Klimaanlage nach Anspruch 1, ein Eingabegerät eines Reglers zur Eingabe von Prozessparametern und die Verwendung dieses Verfahrens bzw. dieses Eingabegeräts für die Programmierung eines Heizungs-/Klimareglers, eines Thermostats oder eines Klimareglers nach einem der Ansprüche 14 bis 16.

Derartige Verfahren und Vorrichtungen sind für unterschiedliche Zwecke und Anwendungen bereits bekannt. So ist beispielsweise aus der EP 0 831 276 A1 ein Eingabegerät für die Steuerung eines Küchenofens bekannt, welches einen sogenannten "Touchscreen" aufweist, der unterschiedliche Anzeige-/Bedienfelder aufweist, die in Verbindung mit festen Anzeige-/Bedienfeldern unterschiedliche Zustände des Ofens anzeigen, wobei diese Felder gleichermassen für die Bedienung der einzelnen Kochplatten des Ofens dienen.

Darüber hinaus sind derartige berührungsempfindliche Eingabefelder beispielsweise für Computer bekannt, die insbesondere auf Flughäfen oder bei Banken aufgestellt sind, um hier dem Bediener die Eingabe seiner Daten insofern zu vereinfachen, als dieser nicht gezwungen wird, eine Tastatur oder eine Maus zu bedienen. Solche berührungsempfindlichen Eingabemasken sind beispielsweise aus der WO 93 11 518 A1 bekannt, die aus zwei transparenten flexiblen Kunststoffolien bestehen, zwischen denen fast unsichtbare Elektroden angebracht sind, die bei Berührung einen elektrischen Kontakt herstellen und dadurch der Kontrolleinheit bzw. dem Steuergerät die Position der Berührung mitteilen, das heisst den 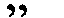 Wunsch" des Bedieners, so dass dieses die Position der Berührung mit der entsprechend unterlegten Funktion vergleichen kann und so die entsprechend angeforderte Funktion ausführt.

Gebäudekontrollsysteme sind dagegen meist viel komplexer. Selbst in einem einfachen Privathaus besteht das Heizungssystem aus einer unterschiedlichen Anzahl von Komponenten wie beispielsweise einem Brenner, einer Pumpe, verschiedenen Ventilen, Thermostaten für die unterschiedlichen Räume und evtl. darüber hinaus noch einer Klimaanlage, die allesamt geregelt bzw. gesteuert werden müssen und je nach Heizungsprogramm unterschiedliche Aufgaben wahrnehmen. Dabei müssen beispielsweise von dem Heizungssystem unterschiedliche Heiztemperaturen für unterschiedliche Zeiten des Tages oder für unterschiedliche Tage der Woche, der Saison oder während Ferientagen zur Verfügung gestellt werden. Die Regeleinrichtungen für grössere Gebäude, beispielsweise Industrieanlagen, sind dabei noch weitaus komplizierter.

Die heutigen 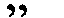 intelligenten" Gebäuderegelsysteme beinhalten dabei die Regelung von Heizung, Air-conditioning, Sicherheitssystemen, Feuerdetektionsgeräten und weiteren Anlagen zur Unterhaltung eines Gebäudes, so dass auch hier die Komplexität immer weiter steigt. Um derartige Systeme zuverlässig zu regeln bzw. zu steuern, muss der jeweilige Benutzer meist sehr komplizierte und dicke Bedienungsanleitungen durchlesen.

Darüber hinaus besteht die Schwierigkeit bei der Einstellung entsprechender Regelparameter bzw. Prozessparameter für die unterschiedlichen Prozesse innerhalb eines Gebäudekontrollsystems darin, dass der Benutzer häufig nur selten Veränderungen an der Einstellung entsprechender Prozessparameter vornimmt - beispielsweise im Sommer oder im Winter - so dass er hier im Gegensatz zu der Bedienung von Computern oder Küchengeräten meist nicht mehr die Bedienungsanleitung des Regelgeräts in seiner Erinnerung behält.

Herkömmliche Regelgeräte zur Regelung von beispielsweise Heizungs-/Klimaanlagen eines Hauses sind meist sehr komplex aufgebaut, da die unterschiedliche Vielzahl von Prozessparametern für eine Vielzahl von unterschiedlichen Prozesszuständen eingegeben werden müssen. Fehler in der Programmierung solch herkömmlicher Heizungsregler werden meist nicht sofort erkannt, sondern führen über die Zeitdauer von Tagen, Wochen oder sogar Monaten zu einem Fehlerzustand des Systems, wodurch einzelne Geräte, Heizungen oder Anlagen des Systems nachhaltig beeinträchtigt oder sogar zerstört werden können. Darüber hinaus bestehen strenge Vorschriften der Technischen Überwachungsvereine und der entsprechenden Zulassungsstellen für die Zulassung und Inbetriebnahme derartiger Heizungsregler, so dass diese 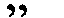 fail safe" ausgelegt werden müssen. Auch hier besteht ein fundamentaler Unterschied zwischen diesen sehr komplizierten Heizungsreglern und der einfachen Bedienung von Küchengeräten, Faxgerät, Kopierer oder Banküberweisungs-Computer.

Diese o.g. Faktoren - die grosse Komplexität der entsprechenden Heizungsgeräte - die komplizierten Anweisungen an die Bediener solcher Heizungsgeräte, die entsprechend grossen Zeitabstände zwischen der Bedienung solcher Geräte und das inhärente Potential von schwerwiegenden und sogar Gebäude zerstörenden Fehlbedienungen solcher Heizungsregler - führt schon seit geraumer Zeit dazu, dass ein Bedarf an einfach zu bedienenden und intuitiven Benutzeroberflächen für die Eingabe von Prozessparametern bei Heizungsreglern besteht.

Aus der EP 0 332 957 ist ein Heizungssteuergerät bekannt, welches u. a. ein Multifunktionsdisplay aufweist, auf welchern sowohl feste als auch variable Eingabefelder vorhanden sind. Die entsprechenden Tastenfelder sind bestimmten Betriebsarten fest zugeordnet, wobei dieses Heizungssteuergerät eine Zeile von variablen Tastenfeldern aufweist, die je nach angewählter Bedienebene für die Einstellung jeweils unterschiedlicher Prozessparameter geeignet sind. Diesen Tasten, die an einem festen Ort des Eingabefeldes angeordnet sind, können jeweils wahlweise menüartig verschiedene Funktionen zugeordnet werden. Der Nachteil dieses Heizungssteuergeräts liegt ebenfalls in der hohen Komplexität der Eingabe der entsprechenden Prozessparameter, die von der Bedienperson einen hohen Wissensstandard über die Art und Weise der Programmierung dieses Heizungssteuergeräts abverlangt, da diese Tastenfelder einerseits stets an einem festen Ort angebracht sind und andererseits in ihrer Grösse nicht veränderbar sind, so dass die Bedienperson gezwungen ist, durch ein oftmaliges und wiederholtes Drücken verschiedener Tasten zu unterschiedlichen Bedienebenen vorzustossen. Diese Bedienebenen sind jedoch sehr kompliziert aufgebaut und durch eine weitgehende konstante Tastenbelegung in ihrer Verwendung beschränkt verständlich. Die variablen Tasten sind ebenfalls mit fest wiederkehrenden Bedeutungen hinterlegt und in ihrer Größe unveränderlich.

Der vorliegenden Erfindung liegt daher die Aufgabe zugrunde, Verfahren und Vorrichtungen zur Eingabe von Prozessparametern einer Heizungs-/Klimaanlage der eingangs genannten Art dahingehend zu verbessern, dass die Nachteile der herkömmlichen Verfahren und Vorrichtungen vermieden werden und es insbesondere der Bedienperson gestattet, ohne Vorkenntnisse und ohne dem Studium langer und komplizierter Bedienungsanleitungen den Regler einer Heizungs-/Klimaanlage oder mit dieser verbundener Komponenten intuitiv zu programmieren.

Die Aufgabe der vorliegenden Erfindung wird durch die unabhängigen Ansprüche 1 und 7 gelöst. Weitere vorteilhafte Ausgestaltungen sind in den jeweiligen Unteransprüchen beansprucht; einige Verwendungen des erfindungsgemässen Verfahrens bzw. des erfindungsgemässen Eingabegeräts sind in den Ansprüchen 14-16 beansprucht.

Die vorliegende Erfindung beschreibt ein Verfahren zur Eingabe von Prozessparametern insb. einer Heizungs-/Klimaanlage oder mit dieser verbundener Komponenten, wobei auf einem Eingabegerät eines Reglers der Heizungs-/Klimaanlage oder beispielsweise eines Reglers der Raumtemperatur eines Raumes oder der Klimatisierung verschiedener Räume eines Gebäudes mittels variabler Anzeige-/Bedienfelder und ggf. in Verbindung mit festen Anzeige-/Bedienfeldern unterschiedliche Prozesszustände und /oder die entsprechenden einzustellenden Prozessparameter angezeigt werden. Durch die Wahl unterschiedlicher Bedienebenen können pro gewählter Bedienebene die entsprechenden Prozessparameter eingegeben werden, wobei hier unterschiedliche Anzeige-/Bedienfelder erscheinen. Diese Anzeige-/Bedienfelder sind derart variabel gestaltet, dass sie pro Bedienebene zum einen entweder als Anzeige- oder Bedienfeld fungieren oder auch keine Aufgabe wahrnehmen und sich jeweils in ihrer Funktion, ihrer Bedeutung und ihrer Grösse ändern, wobei je nach Bedienebene die Bedienperson durch unterschiedlich gestaltete Anzeige-/Bedienfelder, die an unterschiedlichen Positionen des Eingabegeräts in unterschiedlichen Grössen und mit unterschiedlichen Funktionen auftauchen, geleitet wird und so eine intuitive Benutzerführung gewährleistet wird.

Der Benutzer 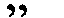 hangelt" sich anhand einfacher, intuitiv selbsterklärender Symbole durch Drücken der entsprechenden Bedienfelder menüartig durch die Bedienebenen, die durch die Anzeige unterschiedlicher Bedienfelder an unterschiedlichen Positionen und mit unterschiedlicher Grösse den Benutzer schrittweise durch die Programmierung des Heizungsreglers führen.

Die Wahl der unterschiedlichen Bedienebenen kann dabei auf unterschiedliche Art und Weise erfolgen: Zum einen ist es möglich, die unterschiedlichen Bedienebenen mittels bestimmter Anzeige-/Bedienfelder auszuwählen. Wird also ein bestimmtes Bedienfeld aktiviert, so ändern sich Teile des oder auch das gesamte Eingabefeld, es erscheinen neue Bedien-/Anzeigefelder mit unterschiedlicher Grösse und Funktion und zeigen somit dem Benutzer aufeinfache Art und Weise an, welchen Prozessparameter er gerade verstellt und welcher Prozesszustand bzw. welcher Prozessparameter gerade aktuell ist.

Eine andere Möglichkeit besteht darin, durch den Einschub verschiedener Steckkarten das Eingabefeld des Eingabegeräts zu unterlegen, so dass je nach eingelegter Steckkarte die entsprechenden Bedienfelder des Eingabefeldes unterschiedliche Funktionen, Bedeutungen und Grössen aufweisen. Die Steckkarten sind dabei mit Informationen zur Wahl der unterschiedlichen Bedienebenen ausgestattet. Die Steckkarten definieren dann die unterschiedlichen Bedienebenen, die Funktionen des Eingabegeräts und die Darstellung und Wahl von zumindest Teilen der Anzeige-/Bedienfelder. Die Steckkarten können als magnetische, mechanische, elektronische oder optische Datenträger ausgelegt sein und die Form einer Kredit- oder Telefonkarte aufweisen, die entweder einen Magnetstreifen, einen elektronischen Chip oder eine Lochrasterung aufweist, um dem Eingabegerät mitzuteilen, welche Funktion eingestellt werden soll, oder welche Funktion das Eingabegerät übernehmen soll. Das Eingabegerät weist entsprechende Mittel zur Kommunikation mit der entsprechenden Steckkarte auf.

Mittel dieser Steckkarten, die aufdem Eingabegerät mit den entsprechenden LED, LCD oder fest angebrachten Anzeigen teilweise oder ganz korrespondieren und diese visuell ersetzen, bzw. ergänzen oder funktionell einstellen, optimieren und/oder parametrieren, kann der Servicefachmann oder auch der Nutzer der entsprechenden einzustellenden Anlage schnell und kostengünstig das Eingabegerät programmieren und einstellen. Die anlagespezifischen Parameter werden vor Ort durch den Einschub der Karte übertragen und mit einem Anlageschema und der Tastenzuordnung versehen. Durch das Einsetzen der Steckkarte wird dann das Gerät parametriert, kontrolliert und optimiert. Diese Kombination von Steckkarte, variablen Anzeige-/Bedienfelder und automatische Zuordnung derselben reduziert massgeblich die Zeit des Servicepersonals vor Ort sowie die Wartungs-, Installations-, und Umprogrammierkosten.

Eine weitere Möglichkeit besteht darin, dass mit dem Eingabegerät lösbar verbundene Eingabefeld über eine Oberfläche gleiten zu lassen, die übersichtlich sämtliche Prozesszustände bzw. Prozessparameter des zu regelnden Prozesses anzeigt, um so die entsprechenden Prozessparameter einzustellen. Die unterschiedlichen Positionen des Eingabefeldes repräsentieren dabei die unterschiedlichen Bedienebenen, die im Falle der Steckkarten oder der Aktivierung unterschiedlicher Bedienebenen durch Anzeige-/Bedienfelder die einzelnen Bedienebenen repräsentieren.

Dabei können die variablen Anzeige-/Bedienfelder jeweils nur den Teil des Prozesses wiedergeben, der durch die entsprechende Bedienebene ausgewählt wird und der für die Einstellung des entsprechenden Prozessparameters gerade von Notwendigkeit ist, so dass hier die Bedienperson nicht mit einem Übermass von verwirrenden Informationen überflutet wird.

Vorteilhafterweise werden bei der Eingabe der Prozessparameter durch entsprechende Anzeige-/ Bedienfelder die jeweils aktuellen Prozessparameter interaktiv verändert, so dass die Bedienperson stets eine Kontrolle darüber hat, was sie gerade tut. So erleichtert die dynamische Veränderung der entsprechenden Prozessparameter bei der Eingabe von entsprechenden Werten in 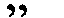 spielerischer Art und Weise die Programmierung des Regelgeräts". Hierbei sind die unterschiedlichsten graphischen Möglichkeiten gegeben, um der Bedienperson die Eingabe der verschiedenen Prozessparameter zu erleichtern. Auch ist es dadurch möglich, mit ein- und demselben Eingabegerät unterschiedliche Regler zu programmieren, das heisst, es ist auch möglich, ein portables Eingabegerät zu verwenden, welches an den entsprechenden Regler angeschlossen wird, der dann über die oben angegebenen entsprechenden Bedienebenen programmiert werden kann. Dies führt zu einer drastischen Kostenreduktion von Eingabegeräten für Regler einer Heizungs-/Klimaanlage oder mit diesen verbundenen Komponenten. Auch wird dem Benutzer die Einstellung der unterschiedlichsten Komponenten der Heizungs-/Klimaanlage dadurch erleichtert, dass er stets mit derselben Menüführung und mit denselben Symbolen und Darstellungen von Prozessparametern konfrontiert wird, so dass er, unabhängig von der Einstellung der Temperatur eines Raumes, der Einstellung des zentralen Heizungskessels oder der Einstellung der Raumklimatisierung unterschiedlicher Räume stets mit ein- und demselben Eingabegerät die unterschiedlichsten Programmierungen vornehmen kann.

Das Eingabefeld ist dabei ein berührungsempfindliches und transparentes Eingabefeld, welches die unterschiedlichen Bedienfelder in bekannter Art und Weise durch ein transparentes bzw. semipermeables 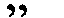 Touch-screen"-Element realisiert. Diese transparenten Elemente sind bekannt und in grosser Stückzahl am Markt erhältlich. Dabei ist es vorteilhaft, das Eingabefeld lösbar mit dem Eingabegerät zu verbinden und entsprechende Kommunikationsmittel vorzusehen, um eine Kommunikation zwischen dem Eingabefeld und dem Eingabegerät zu ermöglichen. Diese Kommunikation kann entweder drahtgebunden, funkgesteuert oder optisch erfolgen, so dass die Bedienperson beispielsweise mit einem portablen Eingabefeld unterschiedliche Regler innerhalb ihres Hauses programmieren kann.

Denkbar ist beispielsweise das Anbringen von bestimmten, mit Symbolen hinterlegten Oberflächen auf oder in der Nähe von den entsprechenden Reglern, so dass hier das Eingabefeld lediglich auf die Oberfläche aufgelegt werden muss, um hier die entsprechenden Programmierungen vornehmen zu können. Die Oberfläche weist dabei mechanische oder elektromagnetische Mittel auf, um die jeweilige Position des Eingabefeldes aufder Oberfläche festzustellen. Ähnlich der bei Computern bekannten 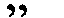 Mäusen" kann so das Eingabefeld über die Oberfläche geschoben werden, wobei je nach Position aufder Oberfläche den einzelnen Anzeige-/ Bedienfelder des Eingabefeldes unterschiedliche Funktionen, Grössen und Bedeutungen zugeordnet werden. Möglich ist dabei auch die Kombination dieses Eingabefeldes mit einer LED-Anzeige, die auch in das Eingabefeld mitintegriert werden kann und darüber hinaus ebenfalls transparent gestaltet werden könnte, so dass je nach gewählter Funktion bzw je nach einzustellenden Prozessparametern neben der hinterlegten Oberfläche aufdem Eingabefeld selbst der entsprechend aktuelle Prozessparameter angezeigt wird, der sich dann bei der Eingabe von entsprechenden Werten dynamisch verändert.

Das Eingabegerät selbst kann auch eine Öffnung zur Aufnahme von Steckkarten aufweisen, die die unterschiedlichen Bedienebenen definieren und die beispielsweise mit einer Lochrasterung versehen sind, um dem Eingabegerät die Detektion der entsprechenden Art der jeweiligen Steckkarte zu ermöglichen. Beispielsweise kann die Steckkarte auch mit einem Magnetstreifen versehen sein, der dem Eingabegerät anzeigt, welche Steckkarte gerade eingeschoben wird, wobei dann das Eingabegerät dem Eingabefeld mitteilt, welche Anzeige-/Bedienfelder aktiviert werden, welche Funktion und Bedeutung sie haben, welche Grösse sie aufweisen sollen und evtl. welche LED-Anzeigen aktiviert werden sollen. Diese LED-Anzeigen können auch Teilen des Eingabefeldes hinterlegt sein, so dass dann die entsprechenden Anzeige-/Bedienfelder des Eingabefeldes an diesem Ort keine Funktion aufweisen.

So lassen sich die unterschiedlichsten Grössen von Bedienfeldern bzw. Anzeigefeldern definieren, die entweder eine Anzeige oder eine Bedienfunktion haben oder die lediglich als funktionsloses 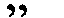 Glas" für das Sichtbarmachen darunterliegender LED-Anzeigen, Oberfläche, Symbole oder Graphiken fungieren. Die Kombination der Anzeige-/Bedienfelder ist je nach ausgewählter Bedienebene derart gestaltet, dass die einzelnen Felder entweder zur Anzeige oder zur Bedienung oder zur Anzeige und zur Bedienung dienen oder aber auch zur Abdeckung oder zur Sichtbarmachung von darunterliegenden Oberflächen dienen. Zwischen der LCD/LED-Anzeige bzw. der Anzeige-/Bedienoberfläche und dem berührungsempfindlichen Element, d.h. dem "Touch-Screen"-Eingabefeld, können auch farbige Plastik- oder Papierkarten eingeschoben werden, die Teile des darunterliegenden Anzeigefeldes verdecken, um hier besondere Eingabe-/Anzeigeoptionen zu realisieren. Dadurch lassen sich besondere Elemente hervorheben, wie beispielsweise die Zeiten der Absenktemperatur und die Zeiten der Heizintervalle, die teilweise durch die farblich markierten Karten, teilweise durch das darunterliegende "Display" markiert, hervorgehoben, oder beleuchtet werden können, um so dem Benutzer anzuzeigen, dass dieses Feld derzeit aktiviert oder deaktiviert ist.

Einige bevorzugte Ausführungsbeispiele der erfindungsgemässen Vorrichtung bzw. des erfindungsgemässen Verfahrens werden anhand der nachfolgenden Zeichnungen näher erläutert.
Dabei zeigen:
- Fig. 1: die schematische Ansicht einer Heizungs-/Klimaanlage mit dem erfindungsgemässen Eingabegerät und der vergrösserten Ansicht des Eingabefeldes;
- Fig. 2: das Eingabegerät sowie einen Schnitt durch das Eingabegerät;
- Fig. 2a: eine andere Ausgestaltung des Eingabegeräts nach Fig. 2;
- Fig. 2b: eine weitere Ausgestaltung des Eingabegeräts nach Fig. 2;
- Fig. 3: eine weitere Ausgestaltung des Eingabegeräts nach Fig. 2 sowie ein Schnitt durch dieses Eingabegerät;
- Fig. 4: die Ansicht einer ersten Bedienebene des Eingabegeräts;
- Fig. 5: die Ansicht zweier zweiten Bedienebenen;
- Fig. 6a: die Ansicht einer dritten Bedienebene;
- Fg. 6b: die Ansicht einer vierten Bedienebene;
- Fig. 6c: die Ansicht einer fünften Bedienebene;
- Fig. 7: die Ansicht einer weiteren fünften Bedienebene;
- Fig. 8: die Ansicht einer Variation der Bedienebene nach Fig. 7;
- Fig. 9: die Ansicht einer dynasmischen 5. Bedienebene mit zugehöriger 6. Bedienebene und
- Fig. 10: die schematische Ansicht einer sehr grossen Zahl von zweidimensional nebeneinander angeordneter Bedienebenen.

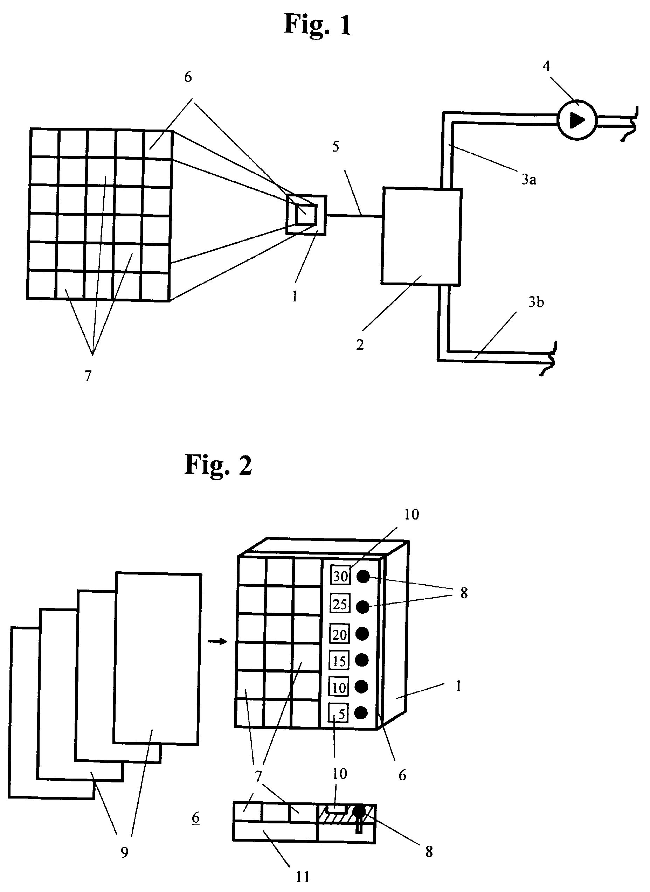

Fig. 1 zeigt schematisch einen Regler 2, beispielsweise einer Heizungs-/Klimaanlage mit Vorlauf 3b, Rücklauf 3a und Pumpe 4. Gleichermassen kann es sich bei dem Regler 2 auch um das Thermostat einer Warmwasserleitung 3a bzw. 3b handeln, das über ein Absperrrventil 4 mit einem oder mehreren Heizkörpern (nicht dargestellt) verbunden ist, das mit Raumtemperatursensoren (nicht dargestellt) verbunden ist, die die jeweilige Raumtemperatur messen und dem Regler 2 zur Verfügung stellen, so dass dieser entsprechend den eingestellten Temperaturen zu den unterschiedlichen Tageszeiten die Warmwasserleitung des Heizungskörpers entsprechend regelt.

An dem Heizungsregler 2 ist ein Eingabegerät 1 angebracht, welches über eine Datenleitung 5 (falls vom Regler 2 entfernt aufgestellt) mit dem Heizungsregler 2 verbunden ist oder welches auch direkt am Regler 2 angebracht sein kann. Das Eingabegerät 1 Weist ein Eingabefeld 6 auf, welches in Fig. 1 in vergrösserter Darstellung hervorgehoben ist, wobei dieses Eingabefeld 6 mit Anzeige-/Bedienfelder 7 ausgestattet ist, die in Fig. 1 schematisch durch entsprechende Anordnung von Zeilen und Spalten dargestellt sind.

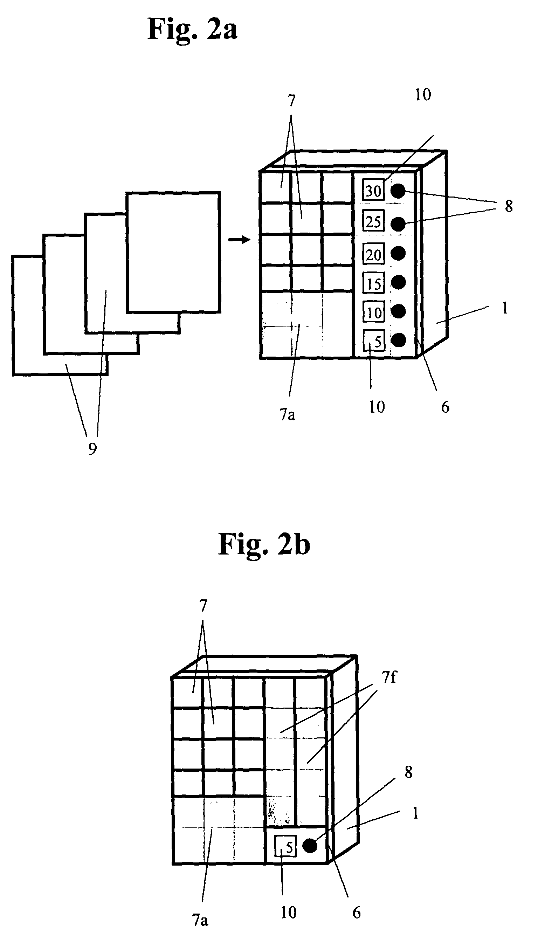

Fig. 2 zeigt die Ansicht des Eingabegeräts 1 mit Eingabefeld 6, welches aufdem Eingabegerät 1 fixiert ist. Das Eingabefeld 6 weist dabei eine Anzahl von Anzeige-/Bedienfeldern 7 auf, die neben festen Anzeige-/Bedienfeldern 10 angeordnet sind. Die rechte Hälfte des Eingabefelds 6 dient zur Anzeige beispielsweise unterschiedlicher Raumtemeperaturen zwischen 5°C und 30°C, wobei die jeweilige aktuelle Temperatur durch das Leuchten einer oder mehrerer Leuchtdioden 8 angezeigt wird. Der Schnitt durch das Eingabegerät 1 zeigt ebenfalls die aufder linken Hälfte angeordneten Anzeige-/Bedienfelder 7 und die für die Anzeige der jeweiligen Temperatur fest eingebauten Schilder oder Aufkleber 10, die neben den entsprechenden Leuchtdioden 8 angeordnet sind. Dabei könnte dieser Bereich des Eingabefeldes 6 auch transparent gestaltet sein, so dass entsprechende Kennzeichnungen unterhalb des Eingabefeldes 6 sichtbar werden. SO lassen sich die entsprechenden Temperaturen z.B. auch durch eine Digitalanzeige realisieren. Unterhalb der variablen Anzeige-/Bedienfelder 7 befindet sich ein Hohlraum 11, der zur Aufnahme von Steckkarten 9 vorgesehen ist, wobei diese Steckkarten entsprechende Mittel aufweisen, so dass das Eingabegerät 1 erkennen kann, welche Steckkarte 9 innerhalb der Öffnung 11 eingeschoben ist. Je nach eingeschobener Steckkarte 9 werden die Anzeige-/Bedienfelder 7 mit unterschiedlichen Funktionen, Bedeutungen und/oder Grössen ausgestattet, so dass entweder einzelne Anzeige-/Bedienfelder 7 einzelne Funktionen haben oder eine Gruppe von Anzeige-/Bedienfelder 7 zu einer einzelnen Funktion oder Anzeige zusammengefasst werden.

Fig. 2a zeigt eine unterschiedliche Ausführungsform des Eingabegeräts 1 nach Fig. 2 mit auf dem Eingabegerät 1 angebrachtem Eingabefeld 6. Auch hier dienen Scheckkarten 9 zum Einschub in eine entsprechend vorgesehene Öffnung 11, wobei diese Steckkarten 9 eine geringere Grösse aufweisen als bei der Ausführungsform nach Fig. 2, so dass die untere linke Hälfte des Eingabefeldes 6 als festes Anzeige-/Bedienfeld 7a dient. Dieses Anzeige-/Bedienfeld 7a kann entweder mittels einer darunterliegenden aktiven Oberfläche durch das Eingabegerät 1 mit unterschiedlichen Funktionen und/oder Bedeutungen versehen sein oder lediglich zur Anzeige von Prozessparametern dienen, die über die variablen Anzeige-/Bedienfelder 7 im oberen linken Teil des Eingabefeldes 6 verändert werden können. Auch hier dient beispielsweise die rechte Hälfte des Eingabefeldes 6 zur Anzeige von Temperaturen, die mittels Schildern oder Aufklebern 10 angezeigt werden und deren aktiver Zustand durch entsprechende Leuchdioden 8 angezeigt werden können.

Fig. 2b zeigt eine weitere Ausführungsform des Eingabegeräts 1 nach Fig. 2 oder Fig. 2a, wobei hier zusätzlich das rechte, bisher statische Feld des Eingabefelds 6 durch zwei längliche variable Anzeige-/Bedienfelder 7f ersetzt worden sind, wobei diese Anzeige-/Bedienfelder 7f beispielsweise zur Anzeige aktueller Prozessparameter dienen oder auch zur Eingabe weiterer Funktionen verwendet werden können. Beispielsweise ist es denkbar, bei dem Einschub einer Steckkarte 9 im oberen linken Teil des Eingabefeldes 6 die entsprechenden Bedienfelder 7 mit ihren entsprechenden Funktionen zu hinterlegen, während am linken unteren Teil des Bedienfeldes 6 ein grösseres Anzeigefeld 7a aktiviert wird, welches den aktuell einzustellenden Prozesszustand anzeigt, während das kleine statische Anzeigefeld am rechten unteren Rand des Eingabefeldes 6 als Warnfeld vorgesehen sein kann, falls die Innentemperatur eines Raumes unter den Wert von beispielsweise 5°C fällt. Sollte die Temperatur mehr als 5°C betragen, so können die rechten beiden länglichen Felder 7f des Eingabefeldes 6 zur Anzeige der aktuellen Temperatur und darüber hinaus beispielsweise zur Anzeige des Tags und der Uhrzeit verwendet werden.

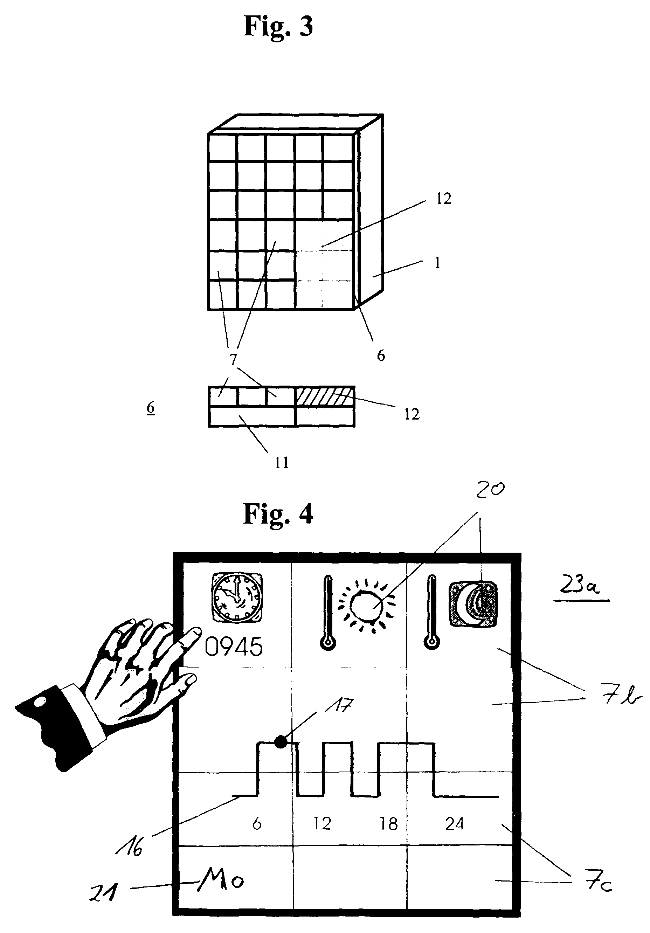

Fig. 3 zeigt eine weitere Ausführungsform des Eingabefeldes 6 nach Fig. 2, Fig. 2a oder Fig. 2b, wobei hier die rechte untere Hälfte des Anzeigefeldes 6 als festes Anzeige-/Bedienfeld 12 vorgesehen ist, welches entweder mit Schaltern, Knöpfen oder Drucktasten versehen sein kann, während die anderen Teile des Eingabefeldes 6 mit variablen Anzeige-/Bedienfeldern 7 versehen sind.

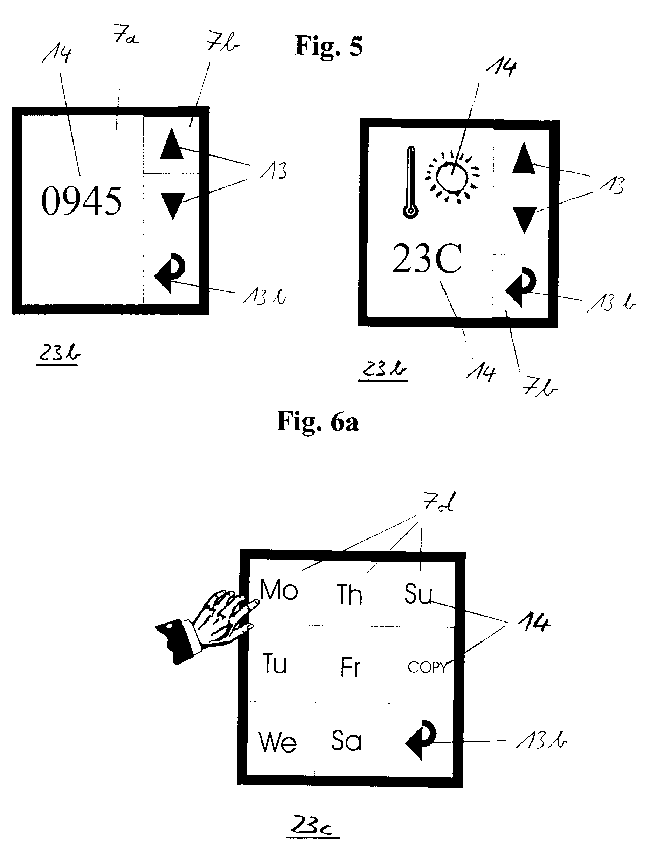

Fig. 4 zeigt beispielhaft eine erste Bedienebene 23a des Bedienfeldes 6, welches in zwei obere Reihen von jeweils sechs variable Anzeige-/Bedienfelder 7b und in zwei untere feste Anzeigefelder 7c unterteilt ist. Das oberste linke variable Anzeige-/Bedienfeld 7b zeigt die aktuelle Uhrzeit, wobei durch Druck auf dieses Bedienfeld das gesamte Eingabefeld 6 verändert wird und beispielsweise eine zweite Bedienebene 23b nach Fig. 5 (auf der linken Seite) erscheint, welches lediglich vier Felder beinhaltet. Auf der linken Seite ist das Anzeigefeld 7a erkennbar, welches die aktuelle Uhrzeit, hier 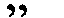 09.45 Uhr" anzeigt. Durch Drücken der oberen beiden rechten Bedientasten (Bedienfelder) 7b lässt sich die Uhrzeit entsprechend verstellen, während die unterste rechte Bedientaste 13b dazu dient, wieder in die erste Bedienebene 23a nach Fig. 4 zurückzuspringen.

Durch Drücken des obersten mittleren Anzeige-/Bedienfeldes 7b nach Fig. 4 wird beispielsweise in die nach Fig. 5 dargestellte zweite Bedienebene 23b gesprungen, die ebenso wie die zweite Bedienebene 23b zur Einstellung der Uhrzeit bedient werden kann. Hier ist aufder linken Seite die aktuelle Tagestemperatur, hier 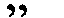 23°C" dargestellt, während wiederum mit den rechten beiden oberen Tasten 13 die aktuelle Tagestemperatur (beispielsweise die Raumtemperatur) eingestellt werden kann. Durch Druck auf das untere rechte Bedienfeld 7b kann durch die 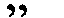 Return"-Taste 13b wieder zurück in den Bidlschirm, das heisst in die erste Bedienebene 23a nach Fig. 4 gesprungen werden.

Ebenso wird mit dem rechten obersten Anzeige-/Bedienfeld 7b zur Einstellung der entsprechenden Nachttemperatur verfahren. Unterhalb der obersten drei Anzeige-/Bedienfelder 7b nach Fig. 4 findet sich die Einstellung des Raumtemperatur-Thermostaten über den gesamten Tag. Erkennbar sind hier auf den unteren beiden Zeilen des Eingabefeldes 6 die Anzeigefelder 7c, die jeweils die unterschiedlichen Uhrzeiten sowie den Tag 21, das heisst beispielsweise der jeweils aktuelle Tag, anzeigen. Die rechteckförmige Kurve zeigt die jeweils eingestellten Raumtemperaturen zu unterschiedlichen Zeiten des Tages, wobei ein Punkt 17 die jeweilige Uhrzeit, die auch im obersten linken Anzeigefeld 7b dargestellt ist anzeigt.

Fig. 6a zeigt eine dritte Bedienebene 23c, die beispielsweise durch Drücken der 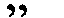 Return"-Tasten 13b nach Fig. 5 erreicht werden kann, sofern dies vorgesehen ist. Hier sind die unterschiedlichen Wochentage angegeben, die wiederum durch unterschiedliche grosse Anzeige-/Bedienfelder 7d dargestellt werden. Die Anzeige der entsprechenden Wochentage 14 dient zur Einstellung der unterschiedlichen Heizkurven für jeden der einzelnen Wochentage, wobei beispielsweise eine Kopierfunktion durch die Bedientaste 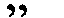 copy" eingebaut ist. Durch Bedienen der 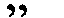 Return"-Taste 13b wird dann wieder in die erste Bedienebene 23a 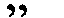 zurückgesprungen". Gleichermassen ist es jedoch auch möglich, durch Drücken der obenbeschriebenen entsprechenden Tasten der ersten Bedienebene 23a in die nach Fig. 6a dargestellte Bedienebene 23c zu springen, so dass hier durch Drücken der entsprechenden Wochentage dann in die jeweils zweiten Bedienebenen 23b nach Fig. 5 gesprungen wird, um hier für unterschiedliche Uhrzeiten und für unterschiedliche Tageszustände die jeweiligen Temperaturen eingeben zu können.

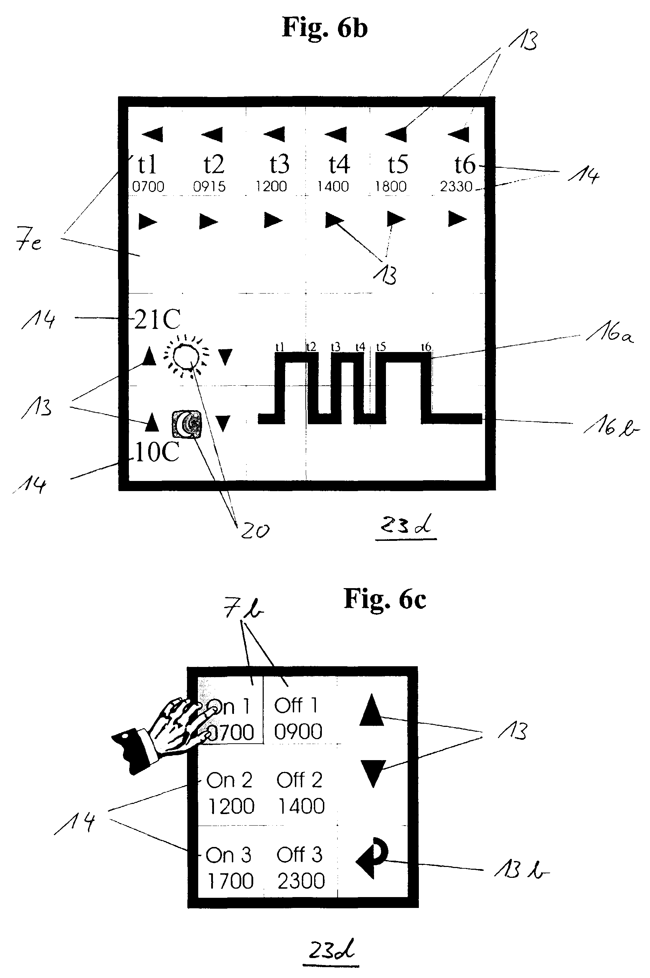

Fig. 6b zeigt eine vierte Bedienebene, die sich dadurch auszeichnet, dass die in Fig. 4 dargestellte rechteckförmige Kurse intuitiv durch Festlegung der einzelnen Zeitpunkte t1 bis t6 eingestellt werden kann. Hier dienen die obersten beiden Reihen der Anzeige-/Bedienfelder 7e sowohl zur Einstellung der unterschiedlichen Zeiten t1 bis t6 als auch zur Anzeige der Zeit als solches, das heisst der jeweils aktuell eingestellten Uhrzeit für den jeweiligen Zeitpunkt, die sich wiederum dynamisch durch Drücken der Pfeiltasten verändert. Statisch ist in diesen Feldern jeweils die Angabe der einzelnen Zeitpunkte t1 bis t6 vorgesehen. So erfüllen diese ersten beiden Reihen der Anzeige-/ Bedientasten 7e das Erfordernis von Anzeigefeldern, von Bedienfeldern und von festen Anzeige-/Bedienfeldern je nach eingestellter Bedienebene.

Die unteren beiden Reihen von Anzeige-/Bedienfeldern 7e dienen zum einen zur dynamischen Anzeige des jeweils eingestellten Prozessparameters t1 bis t6 sowie zur Anzeige der Höhe der entsprechenden Tages- bzw. Nachttemperaturen, die durch die linken unteren vier Anzeige-/Bedienfelder eingestellt werden können. Hierzu dienen ebenfalls wiederum Pfeiltasten 13, die zur Einstellung der entsprechend angezeigten Temperatur 14 dienen. Bei Veränderung bzw. Betätigen der entsprechenden Pfeiltaste 13 verändert sich das obere bzw. untere 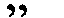 Potential" der Heizkurve 16a und 16b.

Fig. 6c zeigt eine weitere Ausführungsform der vierten Bedienebene 23b, die hier ebenfalls für unterschiedliche Zeiten unterschiedliche Ein-/Aus-Zustände unterschiedlicher Heizperioden definiert. Dazu dienen Anzeige-/Bedienfelder 7b, die bei Berühren entsprechend aktiviert werden und beispielsweise durch Beleuchtung des einzelnen Bedienfeldes dem Bediener anzeigen, dass nunmehr die Zeit innerhalb dieses Bedienfeldes durch Drücken der Pfeiltasten 13 verändert werden kann. Durch Drücken der 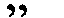 Return"-Taste 13b lässt sich dann wieder in beispielsweise die dritte Bedienebene 23c zurückspringen.

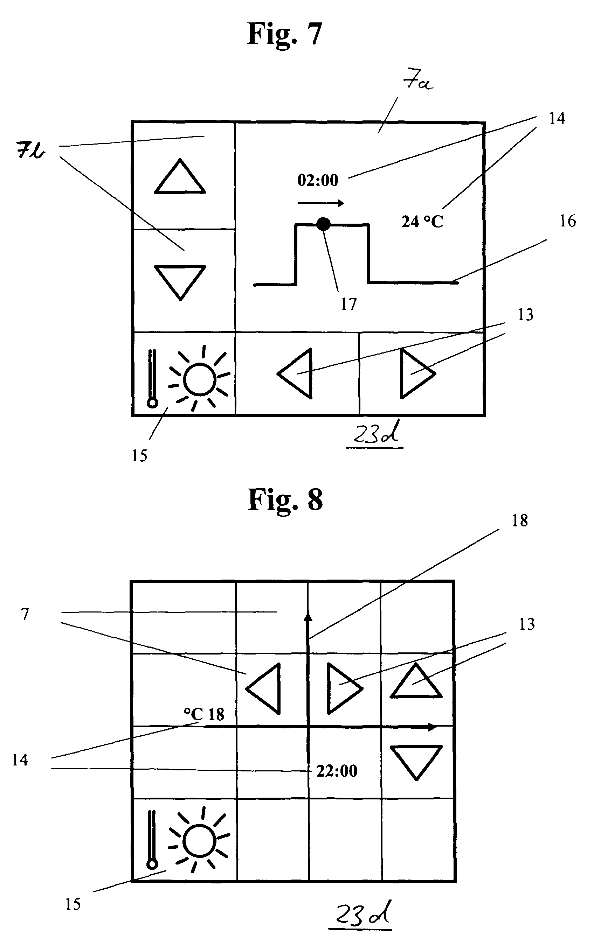

Fig. 7 zeigt eine weitere Ausführungsform des Eingabefeldes 6 mit einem grossen Anzeigefeld 7a, welches über Bedienfelder 7b und darauf angebrachten Pfeilsymbolen 13 verändert wird. Auf dem unteren linken Anzeigefeld 15 befindet sich das Symbol für den jeweiligen Tageszeitraum, hier also beispielsweise den Tagesbetrieb. Durch das Betätigen der beiden linken oberen Pfeiltasten lässt sich also beispielsweise die entsprechende Tagestemperatur (hier 24°C) vergrössern oder verkleinern, während durch die unteren beiden rechten Pfeiltasten 13 der Zeitpunkt des Ein- bzw. Ausschaltens dieser Tagestemperatur verändert werden kann. Ein Ball 17 bewegt sich dabei langsam auf der rechteckförmigen Kurve, so dass, je nachdem an welcher Position sich der Ball befindet, entweder die linken beiden oberen Bedientasten 7b oder die unteren beiden rechten Bedientasten 13 aktiviert werden, so dass hier der Bediener intuitiv sowohl die richtige Zeit als auch die richtige Temperatur einstellen kann.

Fig. 8 zeigt eine weitere Ausführungsform der vierten Bedienebene 23d der Fig. 7, wobei hier nicht eine rechteckförmige Kurve wie in Fig. 7, sondern ein Koordinatenkreuz angegeben ist, welches sowohl auf der horizontalen Achse die jeweils aktuelle Temperatur als auch auf der vertikalen Achse die jeweils gültige Uhrzeit angibt. Durch Betätigen der jeweiligen Pfeiltasten 13 lässt sich der jeweils aktuell eingestellte Wert 16 derart verändern, dass für den gewählten Prozesszustand 15 die entsprechende Temperatur für den entsprechenden Zeitraum oder Zeitpunkt eingestellt werden kann. Auch hier ist klar ersichtlich, dass nur einige der variablen Anzeige-/Bedientasten 7 zur Bedienung vorgesehen sind, während andere Anzeige-/Bedientasten 7 zur Anzeige dienen oder aber auch keinerlei Bedeutung haben.

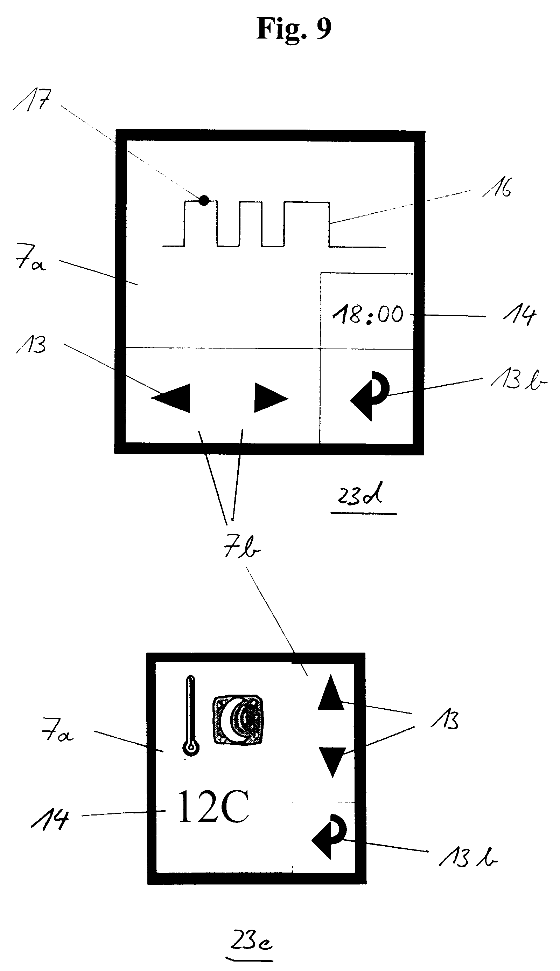

Fig. 9 zeigt eine weitere Einstellmöglichkeit der vierten Bedienebene 23b, die wiederum eine fünfte Bedienebene 23e beinhaltet. Durch Drücken der linken unteren beiden Pfeiltasten 13 der vierten Bedieneben 23d lässt sich dynamisch der Punkt 17 auf der rechteckförmigen Kurve 16 verschieben, wobei gleichzeitig eine Anzeige 14 die jeweils aktuelle Uhrzeit angibt, an der sich der Punkt 17 auf der Kurve 16 befindet. Das obere grosse Anzeigefeld 7a dient daher lediglich zur dynamischen Anzeige desjeweils sich verändernden Prozessparameters, welcher durch die beiden unteren Pfeiltasten verändert werden kann. Durch Drücken der entsprechenden 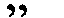 Return"-Taste 13b lässt sich dann für die jeweils ausgewählte Uhrzeit 14 in der sechsten Bedienebene 23e die aktuelle Tages- bzw. Nachttemperatur 14 einstellen, wobei hier das Bedienfeld 7a der sechsten Bedienebene 23e automatisch dasjeweilige Nacht- oder Tagsymbol angibt, je nachem, zu welcher Zeit 14 man in der fünften Bedienebene 23d die 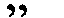 Return"-Taste 13b gedrückt hat. Durch Drücken der 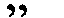 Return"-Taste 13b der sechsten Bedienebene 23e lässt sich dann wieder in die fünfte Bedienebene 23d zurückspringen. Innerhalb der fünften Bedienebene 23d kann ein weiteres Feld (hier nicht gezeigt) vorgesehen sein, welches ein Rückspringen in die erste Bedienebene 23a nach Fig. 4 gewährleistet.

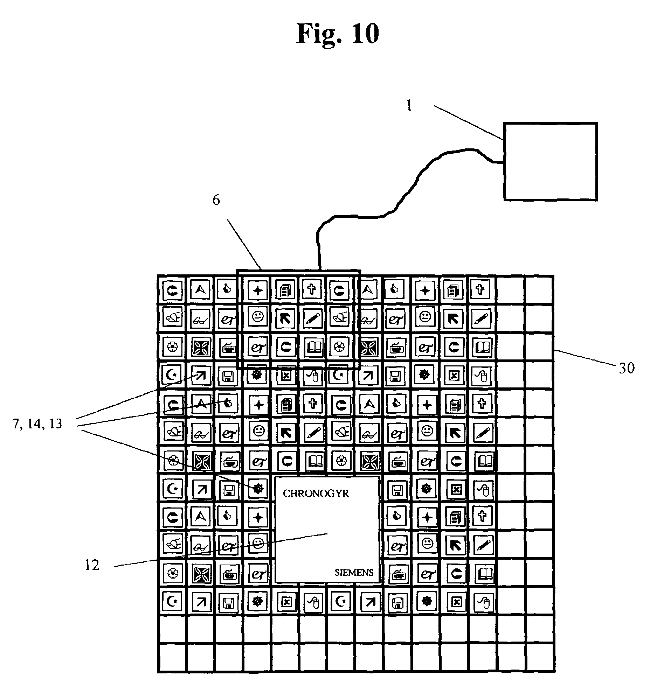

Fig. 10 zeigt eine alternative Ausführungsform der vorliegenden Erfindung mit einem Eingabegerät 1, welches über eine Leitung mit einem transparenten Eingabefeld 6 verbunden ist.

Dieses Eingabefeld 6 lässt sich über die mit Symbolen hinterlegte Oberfläche 30 bewegen, wobei die Oberfläche 30 mit entsprechenden Mitteln versehen ist, um die jeweilige Position des Eingabefeldes 6 zu detektieren. Darüber hinaus kann auch das Eingabefeld 6 selbst mit entsprechenden Mitteln versehen sein, um dem Eingabegerät 1 jeweils die aktuelle Position auf der Oberfläche 30 mitzuteilen. Dies lässt sich beispielsweise dadurch realisieren, dass das Eingabefeld 6 zunächst an eine 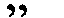 Reset"-Position geschoben wird, an der eine entsprechende Taste auf dem Eingabefeld 6 gedrückt wird, um dem Eingabegerät 1 mitzuteilen, dass das Eingabefeld 6 nunmehr aufder 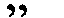 Reset"-Position steht.

Sämtliche realtiven Bewegungen des Eingabefeldes 6 lassen sich dann über optische oder mechanische (beispielsweise kleine Kugeln aufder Unterseite des Rahmens des Eingabefeldes 6) feststellen. Je nach der eingestellten Position des Eingabefeldes 6 auf der Oberfläche 30 werden die entsprechenden Anzeige-/Bedienfelder 7 des Eingabefeldes 6 mit den entsprechenden Funktionen, Bedeutungen und/oder Grössen definiert, so dass das Eingabegerät 1 je nach Position den entsprechenden Anzeige-/Bedienfeldern 7 unterschiedliche Aufgaben zuweisen kann. Die Oberfläche 30 weist dabei Symbole 7, 14, 13 unterschiedlicher Art und Grösse auf und kann auch mit einem zur Information des Bedieners vorgesehenen Oberfläche 12 versehen sein, die an sich technisch keine Funktion übernimmt. Auch hier kann das Eingabefeld 6 mit kombinierten Anzeige-/Bedienfeldern versehen sein, die ggf. Teile der darunterliegenden Oberfläche abdecken oder mit anderen Anzeigen 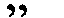 überschreiben" so dass hier ein grösstmögliches Mass an Flexibilität erreicht werden kann.

Diese Anordnung ist insbesondere von Vorteil, da hier die Bedienperson sämtliche Funktionen und sämtliche Prozessparameter und Prozesszustände über die Oberfläche 30 übersichtlich 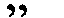 vor Augen" geführt bekommt. Je nach Anwendungszweck 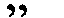 Regler" oder 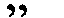 einzustellender Prozessparameter" können unterschiedliche Einstellungen der entsprechenden Anzeige-/Bedienfelder definiert werden.

## Patentansprüche

1. Verfahren zur Eingabe von Prozessparametern, insbesondere einer Heizungs-/Klimaanlage oder mit dieser verbundener Komponenten,
indem auf einem Eingabegerät (1) eines Reglers (2) mittels variabler Anzeige-/Bedienfelder (7, ...7f) und gegebenenfalls in Verbindung mit festen Anzeige-/Bedienfelder (10, 12) unterschiedliche Prozesszustände und/oder die entsprechenden einzustellenden Prozessparameter (14, 16) angezeigt werden, und
verschiedene Bedienebenen (23a,...23e) angewählt werden, um die Prozessparameter (14, 16) über unterschiedliche Anzeige-/Bedienfelder (7, ...7f, 13) einzugeben,
**dadurch gekennzeichnet,**
dass die Prozessparameter (14, 16) über variable Anzeige-/Bedienfelder (7, ...7f) eingegeben werden, die je nach gewählter Bedienebene (23a,...23e) ihre Funktion, Bedeutung und/oder Grösse ändern, wobei die variablen Anzeige-/Bedienfelder (7, ...7f) für unterschiedliche Bedienebenen (23a,...23e) mindestens teilweise an unterschiedlichen Positionen liegen.

2. Verfahren nach Anspruch 1,
**dadurch gekennzeichnet,**
dass die unterschiedlichen Bedienebenen (23a, ... 23e) mittels bestimmter Anzeige-/Bedienfelder (20, 13b) und/oder mittels Steckkarten (9) und/oder mittels dem Eingabefeld (6) des Eingabegeräts (1) unterlegter Oberflächen oder Teile einer Oberfläche (30) gewählt werden.

3. Verfahren nach Anspruch 1 oder 2,
**dadurch gekennzeichnet,**
dass die Prozessparameter (14, 16) über variable Anzeige-/Bedienfelder (7, ...7f) eingegeben werden, die jeweils nur den Teil des Prozesses wiedergeben, der durch die entsprechende Bedienebene (23a,... 23e) ausgewählt wird.

4. Verfahren nach einem der vorhergehenden Ansprüche,
**dadurch gekennzeichnet,**
dass die Steckkarten (9) mit Informationen zur Wahl unterschiedliche Bedienebenen (23a, ... 23e) ausgestattet werden.

5. Verfahren nach einem der vorhergehenden Ansprüche,
**dadurch gekennzeichnet,**
dass die Prozessparameter (14, 16) über variable Anzeige-/Bedienfelder (7, ...7f) eingegeben werden, die, je nach den eingegebenen Werten, sich zumindest teilweise dynamisch verändern und/oder eine andere Bedienebene (23a,... 23e) anzeigen.

6. Verfahren nach einem der vorhergehenden Ansprüche,
**dadurch gekennzeichnet,**
dass Prozessparameter (14, 16) wie Temperaturen, Wochentage, Heizkurven, Heizzeiten, oder Kombinationen von Prozessparametern (14, 16) graphisch dargestellt werden und sich die graphische Darstellung während der Eingabe der Prozessparameter (14, 16) zumindest teilweise verändert.

7. Verfahren nach einem der vorhergehenden Ansprüche,
**dadurch gekennzeichnet,**
dass unterschiedliche Bedienebenen (23a, ... 23e) detektiert und die variablen Anzeige-/Bedienfelder (7, ...7f) dem Eingabefeld (6) oder Teilen des Eingabefeldes (6) des Eingabegeräts (1) entsprechend ihrer Funktion, Bedeutung und/oder ihrer Grösse zugeordnet werden.

8. Eingebegerät (1) eines Reglers (2) zur Eingabe von Prozessparametern, insbesondere einer Heizungs-/Klimaanlage oder mit dieser verbundener Komponenten, mit
variablen Anzeige-/Bedienfeldern (7, ...7f) und gegebenenfalls festen Anzeige-/Bedienfeldern (10, 12), die unterschiedliche Prozesszustände und/oder die entsprechend einzustellenden Prozessparameter (14, 16) anzeigen, und
verschiedenen Bedienebenen (23a,...23e), über die Prozessparameter (14, 16) über unterschiedliche Anzeige-/Bedienfelder (7, ...7f, 13) eingebbar sind,
**dadurch gekennzeichnet,**
dass die Prozessparameter (14, 16) über variable Anzeige-/Bedienfelder (7, ...7f) eingebbar sind, die je nach gewählter Bedienebene (23a,...23e) ihre Funktion, Bedeutung und/oder Grösse ändern, und dass die variablen Anzeige-/Bedienfelder (7, ...7f) für unterschiedliche Bedienebenen (23a,...23e) mindestens teilweise an unterschiedlichen Positionen liegen.

9. Eingabegerät (1) nach Anspruch 8,
**dadurch gekennzeichnet,**
dass das Eingabegerät (1) ein berührungsempfindliches und transparentes Eingabefeld (6) aufweist, das unterschiedliche Bedienfelder (7, ...7f) aufweist, die Berührungen detektieren und an das Eingabegerät (1) weiterleiten, sowie unterhalb des Eingabefeldes (6) liegende Oberflächen, Anzeigen oder Objekte sichtbar machen.

10. Eingabegerät (1) nach Anspruch 8 oder 9,
**dadurch gekennzeichnet,**
dass das Eingabefeld (6) lösbar mit dem Eingabegerät (1) verbunden ist und Mittel zur Datenkommunikation mit dem Eingabegerät (1) aufweist.

11. Eingabegerät (1) nach einem der Ansprüche 8 - 10,
**dadurch gekennzeichnet,**
dass das Eingabegerät (1) eine Öffnung zur Aufnahme von Steckkkarten (9) aufweist, die die unterschiedlichen Bedienebenen (23a,...23e) definieren, sowie Mittel zur Detektion der Art der jeweiligen Steckkarte (9).

12. Eingabegerät (1) nach einem der Ansprüche 8 - 11,
**dadurch gekennzeichnet,**
dass Steckkarten (9) die unterschiedlichen Bedienebenen (23a,...23e), die Funktionen des Eingabegeräts (1) und die Darstellung und Wahl von zumindest Teilen der Anzeige-/Bedienfelder (7, ...7f) definieren.

13. Eingabegerät (1) nach Anspruch 11 oder 12,
**dadurch gekennzeichnet,**
dass die Steckkarten (9) magnetische, mechanische, elektronische oder optische Datenträger sind, und das Eingabegerät (1) entsprechende Mittel zur Kommunikation mit der entsprechenden Steckkarte (9) aufweist.

14. Eingabegerät (1) nach einem der Ansprüche 8 - 13,
**dadurch gekennzeichnet,**
dass das Eingabegerät (1) und/oder das Eingabefeld (6) Muffel zur Detektion der Position des Eingabefeldes (6) aufeiner Oberfläche (30) aufweist, wobei die unterschiedlichen Positionen des Eingabefeldes (6) auf der Oberfläche (30) die unterschiedlichen Bedienebenen (23a,...23e) definieren.

15. Eingabegerät (1) nach einem der Ansprüche 8 - 14,
**dadurch gekennzeichnet,**
dass die einzelnen Bedienfelder (7, ...7f) des Eingabefeldes (6) je nach gewählter oder detektierter Bedienebene (23a,... 23e) individuell aktiviert oder deaktiviert werden.

16. Eingabegerät (1) nach einem der Ansprüche 8 - 15,
**dadurch gekennzeichnet,**
dass die einzelnen Bedienfelder (7, ...7f) des Eingabefeldes (6) auch zur Anzeige von Prozessparametern (14, 16) und/oder Prozesszuständen verwendbar sind.

17. Verwendung eines Eingabegeräts (1) nach einem der Ansprüche 8 - 16 oder eines Verfahrens nach einem der Ansprüche 1 - 7 für die Programmierung eines Heizungsreglers einer Heizanlage.

18. Verwendung eines Eingabegeräts (1) nach einem der Ansprüche 8 - 16 oder eines Verfahrens nach einem der Ansprüche 1 - 7 für die Programmierung eines Thermostats für die Einstellung der Raumtemperatur eines durch eine Heizanlage geheizten und/oder durch eine Klimaanlage gekühlten Raumes.

19. Verwendung eines Eingabegeräts (1) nach einem der Ansprüche 8 - 16 oder eines Verfahrens nach einem der Ansprüche 1 - 7 für die Programmierung eines Klimareglers für einzelne oder alle Räume eines Gebäudes.
